# EUROPÄISCHE PATENTSCHRIFT

(11) **EP 1 563 719 B1**
(45) Veröffentlichungstag und Bekanntmachung des Hinweises auf die Patenterteilung: **29.06.2011**
(21) Anmeldenummer: 03775382.9
(22) Anmeldetag: 21.11.2003
(51) Int. Cl.: H05G 1/10, H05G 1/36, H05G 1/24

(54) **RÖNTGENANLAGE ZUR ERZEUGUNG VON KURZEN RÖNTGENSTRAHLENIMPULSEN UND MIT EINER SOLCHEN RÖNTGENANLAGE ARBEITENDE INSPEKTIONSVORRICHTUNG**
X-RAY APPARATUS FOR GENERATING SHORT X-RAY PULSES, AND INSPECTING DEVICE OPERATING BY MEANS OF SUCH AN X-RAY APPARATUS
APPAREIL A RAYONS X DESTINE A PRODUIRE DES IMPULSIONS DE RAYONS X COURTES ET SYSTEME DE CONTROLE EQUIPE D'UN TEL APPAREIL

(30) Priorität: 21.11.2002 DE 20218138 U
(43) Veröffentlichungstag der Anmeldung: 17.08.2005
(73) Patentinhaber: HEUFT SYSTEMTECHNIK GMBH, 56659 Burgbrohl (DE)
(72) Erfinder: HEUFT, Bernhard, 56659 Burgbrohl (DE); POLSTER, Wolfgang, 56626 Andernach (DE)
(74) Vertreter: Gritschneder, Martin
(86) Internationale Anmeldenummer: PCT/EP2003/013082
(87) Internationale Veröffentlichungsnummer: WO 2004/047504

(56) Entgegenhaltungen:
- DE-C- 659 016
- GB-A- 649 876
- US-A- 3 567 939
- PATENT ABSTRACTS OF JAPAN vol. 010, no. 121 (E-401), 7. Mai 1986 (1986-05-07) & JP 60 254600 A (TOSHIBA KK), 16. Dezember 1985 (1985-12-16)

## Beschreibung

Die Erfindung betrifft eine Röntgenanlage zur Erzeugung von kurzen Röntgenstrahlenimpulsen. Die Röntgenanlage enthält eine Röntgenröhre mit einer Glühkathode und einer Anode sowie einen Röntgengenerator mit einer ersten Schaltung zur Erzeugung eines Hochspannungsimpulses, der zur Erzeugung des Röntgenstrahlenimpulses an die Anode anlegbar ist. Der Röntgengenerator weist eine zweite Schaltung auf, über die ständig eine niedrige Spannung an die Anode angelegt wird, die allenfalls zur Erzeugung von niedrigenergetischer Röntgenstrahlung ausreicht und die die Röntgenröhre vorheizt.

Die Erfindung betrifft ferner eine Vorrichtung zur Inspektion von Behältern, z.B. Getränkeflaschen oder Reisekoffern oder -taschen, die auf einer Transporteinrichtung befördert werden. Die Inspektionsvorrichtung weist eine bildgebende Einrichtung mit einer Röntgenanlage der eingangs genannten Art auf.

Röntgenanlagen zur Erzeugung kurzer Röntgenstrahlenimpulse sind aus DE-C-32 16 733, US-A 4 947 415 und WO 94/23552 bekannt. Diese Anlagen dienen zur Erzeugung extrem kurzer Röntgenstrahlenimpulse einer Dauer von einigen Nano-Sekunden. Zur Erzeugung des Hochspannungsimpulses werden dabei speziell ausgestaltete Kondensatoren verwendet, um die Hochspannungsenergie innerhalb der extrem kurzen Impulsdauer an die Anode übertragen zu können.

Aus WO 02/31857 ist eine Röntgenanlage mit einer Elektronen-Feld-Emmissions-Kathode bekannt, mit der Röntgenstrahlungsimpulse unterschiedlicher Energie erzeugt werden können, indem der Elektronenstrahl auf unterschiedliche Anodenmaterialien fokussiert wird.

Aus EP-A-1 158 842 ist ein Röntgenstrahlengenerator zur Erzeugung von Röntgenstrahlenimpulsen bekannt, wobei die Hochspannung ständig an der Anode anliegt und die Gitterspannung in Abhängigkeit von dem Kathodenstrom so gesteuert wird, dass während der Zeit, in der keine Röntgenstrahlen erzeugt werden sollen, keine Elektroden an die Anode gelangen. Mittels der Gitterspannung wird auch die Impulsdauer gesteuert. Dadurch soll es ermöglicht werden, einen stabilen Röntgenstrahlenimpuls zu erzeugen.

Aus US-Patent 3,567,939, die den nächsten Stand der Technik darstellt, ist eine Schaltung zum Betreiben einer Röntgenröhre bekannt, bei der über eine Niederspannungsquelle ständig eine relativ niedrige Spannung von maximal 10 kV an der Anode anliegt. Auf diese Weise wird Röntgenstrahlung relativ niedriger Intensität erzeugt, die durch das Gehäuse absorbiert wird. Ziel der US 3,567,939 ist es, die Lebensdauer der Röntgenröhre zu verlängern.

Es ist bekannt, zur Inspektion von Getränkeflaschen und Reisegepäck, die auf einer Transporteinrichtung an einer bildgebenden Einrichtung vorbeibewegt werden, Röntgenstrahlen einzusetzen. Als bildgebende Systeme werden Röntgenbildverstärker oder -wandler mit einer nachgeschalteten CCD-Kamera eingesetzt und das aufgenommene Bild an ein Auswertesystem weitergeleitet. Durch den Einsatz eines Flächensensors im Röntgenbildverstärker ist es dabei möglich, sowohl die Strahlungsenergie als auch die aufgenommene Leistung des Röntgenstrahlenimpulses stark zu reduzieren. Infolge der Bewegung der durchleuchteten Objekte sind die Abbildungen jedoch nicht konturenscharf.

Bei dem Einsatz anderer Sensoren, z.B. Zeilensensoren, muss die gesamte Energie kontinuierlich zur Verfügung gestellt werden, d.h. auch dann, wenn sich kein Prüfobjekt im Strahlengang befindet. Hierdurch werden zum einen hohe Strahlungsenergien freigesetzt und zum anderen hohe elektrische Leistungen benötigt. Es sind daher aufwendige Abschirmungen und Sicherheitsmaßnahmen für den Strahlungsschutz und hohe Anschlussleistungen der Geräte erforderlich.

Der Erfindung liegt die Aufgabe zugrunde, eine Röntgenanlage zu schaffen, die die Erzeugung von Röntgenstrahlenimpulsen im Millisekundenbereich ermöglicht und mit relativ niedriger Strahlungsenergie konturenscharfe Abbildungen ermöglicht.

Erfindungsgemäß wird diese Aufgabe bei einer Röntgenanlage der eingangs genannten Art dadurch gelöst, dass die erste Schaltung ein Marx-Generator ist und dass die zweite Schaltung ein Simmer-Netzteil ist und auch als Spannungsquelle des Marx-Generators eingesetzt wird.

Unter "niedriger Spannung" wird hierbei eine Hochspannung verstanden, bei der allenfalls niedrigenergetische Röntgenstrahlung erzeugt wird, die bereits durch die Glaswand der Röntgenröhre absorbiert wird. Dadurch, dass diese niedrige Spannung ständig an der Anode anliegt wird zwar praktisch keine Röntgenstrahlung erzeugt, die Röntgenröhre wird jedochvorgeheizt, so dass zu jedem beliebigem Zeitpunkt die Röntgenröhre schnell hochgefahren und ein kurzer Röntgenstrahlungsimpuls erzeugt werden kann.

Die Röntgenröhre arbeitet im Simmerbetrieb. Die zweite Schaltung ist dabei ein Simmernetzteil. Eine Schutzdiode schützt das Simmernetzteil bei Zuschaltung der Hochspannung. Zur Erzeugung des Hochspannungsimpulses wird ein Marx-Generator verwendet.

Über eine Heizungsregelung wird die Kathode ständig mit konstantem Heizungsstrom beheizt.

Eine solche Röntgenanlage eignet sich besonders für Vorrichtungen zur Inspektion von Gegenständen, insbesondere Behältern, die mit unregelmäßigen Abständen durch die Inspektionsvorrichtung transportiert werden, da die Startphase zum Hochfahren der Röntgenröhre extrem kurz ist und im Wesentlichen nur von der Entladungskurve der Kondensatoren bestimmt wird. Bei bildgebenden Verfahren, bei denen Flächensensoren wie Röntgenbildverstärker oder -wandler eingesetzt werden, ist dabei von besonderem Vorteil, dass Bewegungsunschärfen vermieden werden.

Bei bildgebenden Verfahren, die mit Zeilensensoren arbeiten, z.B. einer Vielzahl in einer Reihe angeordneter Photomultiplierröhren mit den Szintillationskristallen, ist von Vorteil, dass nicht ständig die hohe Strahlungsleistung zur Verfügung stehen muss, d.h. auch dann, wenn sich kein zu inspizierender Gegenstand im Strahlengang befindet.

Die erfindungsgemäße Röntgenanlage eignet sich insbesonders als Röntgenstrahlenquelle bei der in der deutschen Gebrauchsmusteranmeldung DE-U-202 17 559.6, (Anmeldetag: 12. November 2002, Bezeichnung: "Vorrichtung zur Untersuchung von gefüllten Behältern mittels Röntgenstrahlen").

Ein Ausführungsbeispiel der Erfindung wird nachfolgend anhand der Zeichnung erläutert. Es zeigen:
- Fig. 1: ein Schaltbild der Röntgenanlage;
- Fig. 2: ein Schaltbild eines Marx-Generators und
- Fig. 3: eine Vorrichtung zur Inspektion von Getränkefla- schen, wobei die in Fig. 1 dargestellte Röntgen- anlage eingesetzt wird.

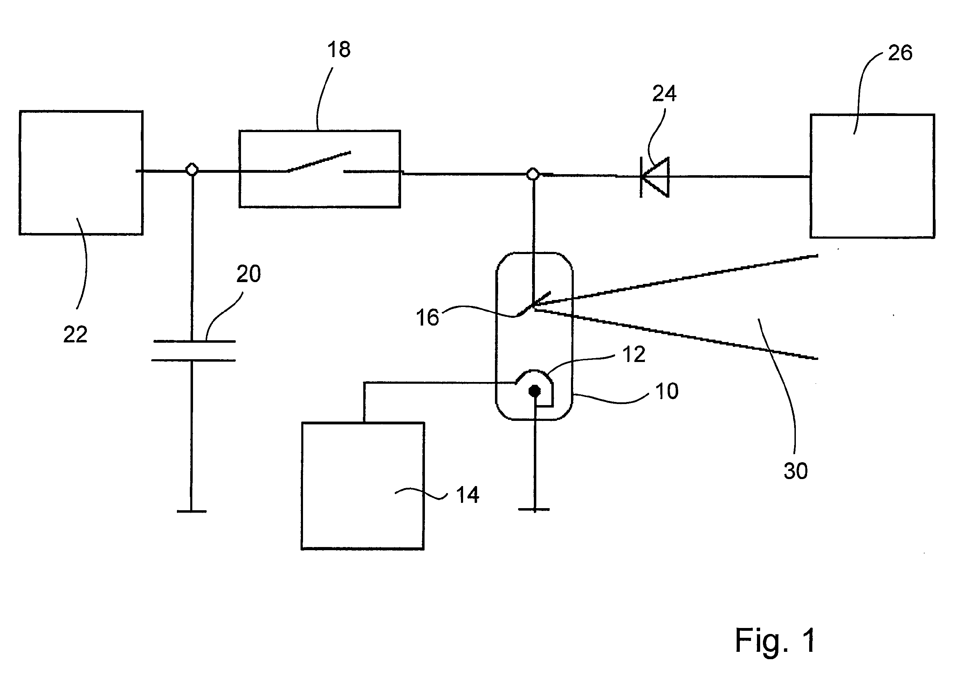

Gemäß dem Schaltbild von Fig. 1 ist die Kathode 12 einer Röntgenröhre 10 an eine Heizungsregelung 14 angeschlossen. Diese versorgt die Kathode 12 mit einem konstanten Heizungsstrom. Die Anode 16 ist über einen Hochspannungsschalter 18 an einen Hochspannungskondensator 20 angeschlossen, der von einem Hochspannungsnetzteil 22 aufgeladen wird. Die Anode 16 ist ferner über eine Schutzdiode 24 an ein Simmernetzteil 26 angeschlossen.

Das Hochspannungsnetzteil 22 lädt den Hochspannungskondensator 20 auf 60 kV auf. Durch Schließen des Hochspannungsschalters 18 wird diese Spannung an die Anode 16 der Röntgenröhre 10 angelegt, wodurch ein Röntgenstrahl 30 erzeugt wird.

Durch ein Simmernetzteil 26 wird die Röntgenröhre 10 im Simmerbetrieb betrieben, wobei das Simmernetzteil 26 eine Spannung von etwa 5kV erzeugt und ständig einen Gleichstrom zwischen ca. 1 und 10 mA durch die Röntgenröhre 10 fließen läßt. Dadurch wird die Röntgenröhre 10 soweit vorgeheizt, dass sie sofort hochfährt und einen Röntgenstrahl 30 erzeugt, wenn der Hochspannungsschalter 18 geschlossen wird. Das Simmernetzteil 26 wird durch die Schutzdiode 24 vor der Hochspannung des Kondensators 20 geschützt.

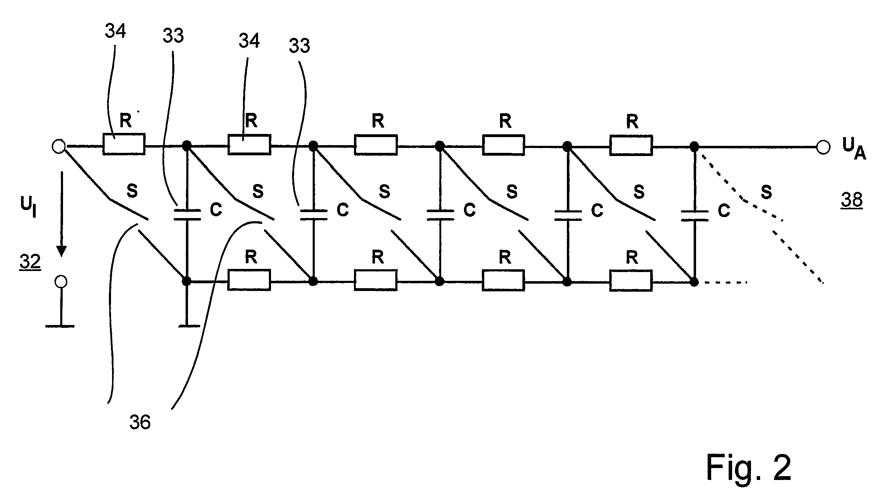

Statt des Hochspannungsnetzteils 22 und des Hochspannungskondensators 20 und des Hochspannungsschalters 18 wird ein Marx-Generator verwendet, wie er in Figur 2 gezeigt ist. Der Marx-Generator ist ein Spannungsvervielfacher, mit dem eine Impuls-Hochspannung erzeugt werden kann. Über eine Spannungsquelle 32 wird eine Anzahl von n Kondensatoren 33, die über Widerstände 34 parallel geschaltet sind, aufgeladen. Zur Auslösung des Hochspannungsimpulses werden die Kondensatoren 33 über einen elektronischen Schalter 36 in Reihe geschaltet. Am Ausgang 38 liegt dann die n-fache Kondensatorspannung an.

Werden z.B. eine Spannungsquelle 32 von 5 kV und 12 parallel geschaltete Kondensatoren 33 verwendet, so hat der erzeugte Hochspannungsimpuls 60 kV. Als Spannungsquelle 32 wird erfindungsgemäß das Simmernetzteil 26 eingesetzt.

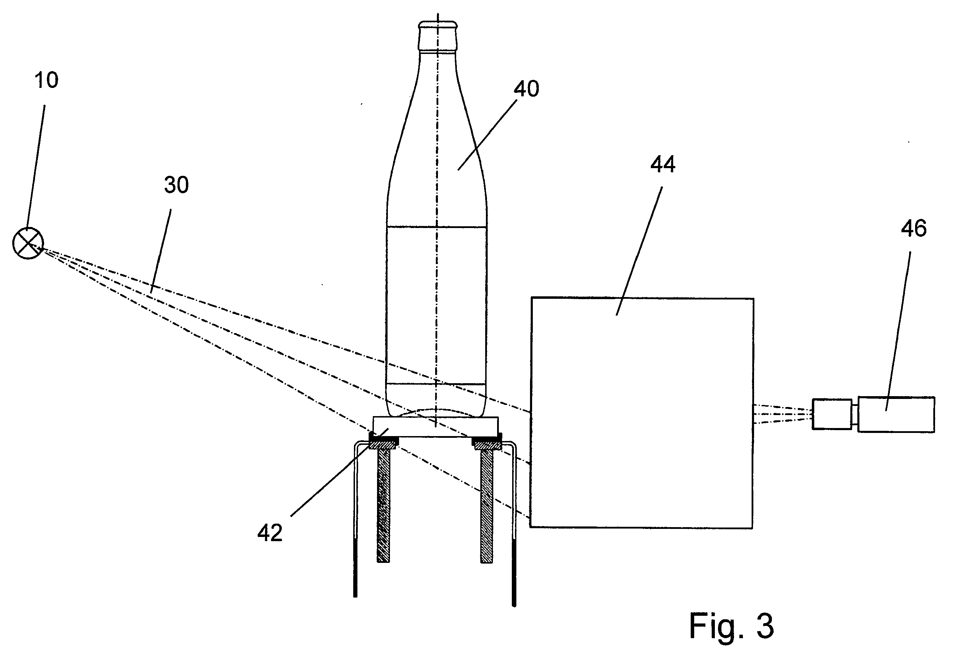

Fig. 3 zeigt eine Vorrichtung zur Inspektion von Getränkeflaschen 40, die auf eine Transporteinrichtung 42, z.B. einem Gliederkettenförderer, transportiert werden. Auf der einen Seite der Transporteinrichtung 42 befindet sich eine Röntgenröhre 10 und auf der gegenüberliegenden Seite der Transporteinrichtung 42 ein Röntgenbildwandler 44, hinter dem eine CCD-Kamera 46 angeordnet ist angeordnet. Mittels einer Einrichtung wie einer Lichtschranke oder eines kapazitiven Sensors wird ein Triggersignal erzeugt, wenn sich eine zu inspizierende Getränkeflasche 40 zwischen der Röntgenröhre 10 und dem Röntgenbildwandler 44 befindet. Durch das Triggersignal wird der Hochspannungsschalter 18 geschlossen, so dass die Röntgenröhre 10 einen impulsförmigen Röntgenstrahl 30 erzeugen. Der Röntgenstrahl 30 trifft nach dem Durchgang durch die Flaschen 40 auf den Röntgenbildwandler 44 und erzeugt dort ein Abbild der Getränkeflasche 40. Das Abbild wird von der CCD-Kamera 46 aufgenommene und wird in bekannter Weise durch Bilderkennungsverfahren verarbeitet, um Fremdkörper, z.B. Glassplitter, in der gefüllten Getränkeflasche 40 zu erkennen. Damit eventuelle Glassplitter durch die Wölbung des Bodens der Getränkeflasche 40 nicht verdeckt werden, ist die Röntgenröhre 10 über der Ebene der Transporteinrichtung 42 angeordnet und richtet den Röntgenstrahl 30 unter einem Winkel von z.B. 30° von oben auf den Behälterboden, wie es im Einzelnen in der oben genannten Gebrauchsmusteranmeldung DE-U-202 17 559.6, (Bezeichnung: "Vorrichtung zur Untersuchung von gefüllten Behältern mittels Röntgenstrahlen") beschrieben ist.

### Bezugszeichen

- 10: Röntgenröhre
- 12: Kathode
- 14: Heizungsregelung
- 16: Anode
- 18: Hochspannungsschalter
- 20: Hochspannungskondensator
- 22: Hochspannungsnetzteil
- 24: Schutzdiode
- 26: Simmernetzteil
- 30: Röntgenstrahlung
- 40: Getränkeflasche
- 32: Spannungsquelle
- 33: Kondensatoren
- 34: Widerstände
- 36: Schalter
- 38: Ausgang
- 42: Transporteinrichtung
- 44: Röntgenbildwandler
- 46: CCD-Kamera

## Patentansprüche

1. Röntgenanlage zur Erzeugung von kurzen Röntgenstrahlenimpulsen, mit einer Röntgenröhre (10), die eine Glühkathode (12) und eine Anode (16) aufweist, und mit einem Röntgengenerator, der eine erste Schaltung (22, 20, 18) zur Erzeugung eines Hochspannungsimpulses aufweist, der zur Erzeugung des Röntgenstrahlenimpulses an die Anode (16) angelegt wird, sowie eine zweite Schaltung (26), über die ständig eine niedrige Spannung an die Anode (16) angelegt wird, die allenfalls zur Erzeugung von niedrigenergetischer Röntgenstrahlung (30), die bereits durch die Wand der Röntgenröhre absorbiert wird, ausreicht und die Röntgenröhre (10) vorheizt, **dadurch gekennzeichnet, dass** die erste Schaltung ein Marx-Generator ist und dass die zweite Schaltung ein Simmer-Netzteil (26) ist und auch als Spannungsquelle (32) des Marx-Generators eingesetzt wird.

2. Vorrichtung zur Inspektion von Gegenständen, mit einer Röntgenanlage (10) und einer bildgebenden Einrichtung (44, 46) zur Erzeugung einer Abbildung des Gegenstandes mittels des Röntgenstrahls (30), **dadurch gekennzeichnet, dass** die Röntgenanlage (10) gemäß dem Anspruch 1 ausgebildet ist.

## Claims

1. X-ray unit for the generation of short X-ray pulses, with an X-ray tube (10) which has a thermionic cathode (12) and an anode (16), and with an X-ray generator which has a first circuit (22, 20, 18) for the generation of a high-voltage pulse which is applied to the anode (16) for the generation of the X-ray pulse, and also a second circuit (26), via which a low voltage is permanently applied to the anode (16) which is at most sufficient for the generation of low-energy X-radiation (30) which will already be absorbed by the wall of the X-ray tube (10), and which pre-heats the X-ray tube (10),
**characterized in that**, the first circuit is a Marx generator and the second circuit is a simmer power supply unit (26) and is also used as voltage source for the Marx generator.

2. Device for the inspection of objects, with an X-ray unit (10) and an imaging apparatus (44, 46) for the generation of an image of the object by means of the X-ray (30), **characterized in that** the X-ray unit (10) is designed according to claim 1.

## Revendications

1. Appareil à rayons X destiné à produire des impulsions de rayons X courtes, avec un tube radiogène (10), qui présente une cathode chaude (12) et une anode (16), et avec un générateur de rayons X, qui présente un premier circuit (22, 20, 18) de production d'une impulsion de tension élevée, placé pour appliquer l'impulsion de rayons X à l'anode (16), ainsi qu'un second circuit (26) qui applique constamment une basse tension à l'anode (16), suffisant dans tous les cas à la production de rayons X de faible énergie (30), absorbés déjà par la paroi du tube radiogène, et préchauffant le tube radiogène (10), **caractérisé en ce que** le premier circuit est un générateur de Marx et le second circuit est un bloc de faible alimentation (26) qui sert aussi de source de tension (32) pour le générateur de Marx.

2. Installation d'inspection d'objets, avec un appareil à rayons X (10) et un appareil de visualisation (44, 46) destiné à produire une image de l'objet au moyen du rayonnement X (30), **caractérisée en ce que** l'appareil à rayons X (10) est construit conformément à la revendication 1.
